# EUROPEAN PATENT SPECIFICATION

(11) **EP 3 299 674 B1**
(45) Date of publication and mention of the grant of the patent: **28.04.2021**
(21) Application number: 17192693.4
(22) Date of filing: 22.09.2017
(51) Int. Cl.: F16H 57/04, B64C 27/12

(54) **OIL-LEVEL SENSOR FOR A GEARBOX**
ÖLSTANDSENSOR FÜR EIN GETRIEBE
CAPTEUR DE NIVEAU D'HUILE POUR UNE BOÎTE DE VITESSES

(30) Priority: 23.09.2016 US 201662399097 P; 17.11.2016 US 201662423371 P; 20.09.2017 US 201715709644
(43) Date of publication of application: 28.03.2018
(73) Proprietor: Bell Helicopter Textron Inc., Fort Worth, TX 76101 (US)
(72) Inventor: POSTER, Scott David, Arlington, TX 76016 (US)
(74) Representative: Barker Brettell LLP

(56) References cited:
- EP-A1- 0 068 677
- WO-A1-2016/089287
- WO-A2-2008/091341
- DE-A1- 1 406 481
- DE-A1-102008 013 059
- DE-A1-102011 077 561
- US-A- 550 112
- US-A- 4 721 184
- US-A1- 2014 353 087

## Description

### TECHNICAL FIELD OF THE INVENTION

The present invention relates in general to the field of rotorcraft, and more particularly to an oil-level sensor for a gearbox.

### BACKGROUND OF THE INVENTION

Without limiting the scope of the invention, its background is described in connection with rotorcraft drive systems.

Since their inception, rotorcraft and rotorcraft drive systems have been improved to reduce the possibility of failure during flight. Toward that end, a number of modifications have been made to drive systems to improve reliability. However, despite advances in materials and design, a number of failures continue to occur that affect rotorcraft performance. One example of a problem with current rotorcraft drive systems is that, in some instances, the failure of single drive system component leads to failure of the entire drive system. Another example is a loss of lubrication event that causes the loss of torque transmission by drive system subcomponents such as gearboxes or accessories connected to the main rotor gearbox.

More particularly, the failure of a single gearbox or shaft connected to the main rotor gearbox can significantly impact operations. For example, if there is a loss of lubrication to a gearbox, the gearbox loses torque transmission causing damage to upstream or downstream components. The same can occur when a shaft becomes unbalanced (or breaks), which can damage couplings, gearboxes and even the main rotor gearbox. Unfortunately, when a portion of a drive system experiences a failure or reduction in performance, the concomitant reduction in power leads to challenges with flight performance.

Thus, a need remains for improving the overall safety and reliability of rotorcraft drive systems that include the connections between the engines and the main rotor gearbox, reduction and accessory gearboxes, shafts, generators, oil pumps, and accessories connected to the main rotor gearbox.

Existing methods and apparatuses for cooling systems such as a main rotor gearbox and accessory gearboxes, and reduction gearboxes typically do not have a capacity for continued operation if components fail. If a lubricant or coolant is not supplied to a component or system in sufficient quantity or distributed within the component or system effectively, or if a lubricant or coolant level in a component or system is falls below a critical level, the component or system may degrade or fail. Methods and apparatuses for supplying lubricants or coolants and for distributing them effectively within components and systems and for efficiently providing status information for lubricant or coolant levels in components and systems in rotorcraft are desirable. US2014/353087A1 describes a transmission having a float level sensor in a fluid sump of the transmission case. A shield having a first panel and a second panel is connected to and generally perpendicular with the first panel. The first panel cooperates with a first wall of the transmission case in the sump. The second panel cooperates with a second wall and a bottom wall of the transmission case in the sump. The first and second panels are adapted to cooperate with the first wall, the second wall, and the bottom wall of the transmission case to form a generally stagnant well within the fluid sump surrounding the fluid level sensor to decrease fluid motion adjacent to the sensor. The generally stagnant well and the sump are in fluid communication with one another.

DE102008013059A1 describes a system including a gear unit, the gear unit including at least one housing cover, a sensor unit on which sensors are provided, being provided on the housing cover, the sensors being connected at least electrically to an evaluation unit.

WO2008/091341A2 describes a lubrication system including an external pump system which pumps air out of the housing and develop negative pressure therein in response to a loss of lubrication condition. The negative pressure operates as an air lock to minimize or prevent lubricating oil loss from the housing while an internal lubrication system continues to distribute lubricating oil - which although now increasing in temperature - still operates to lubricate the gearbox components.

DE102011077561A1 describes a unit having a lubricating oil pump for mounting on a gear housing. An oil level sensor and the lubricating oil pump are mounted on a common mounting element at the gear housing. A head part of the oil level sensor is arranged between the lubricating oil pump and the gear housing in an installation state of the unit, where the head part protrudes from the gear housing. The lubricating oil pump and the oil level sensor include a common interface for connection with a control device.

WO2016/089287A1 describes a lubrication system and a method for controlling the lubrication system. The lubrication system comprises a bypass line by which it is possible to lead a part of the oil flow in the oil line past a component to be lubricated and back to the oil sump, a first valve configured to regulate the oil flow through the bypass line and a control unit. The control unit is configured to receive information from at least one parameter related to the oil flow to said component, to estimate a required oil flow to said component in view of said parameter and to regulate the first valve such that a part of the oil flow in the oil line is led to the bypass line and that a remaining part of the oil flow, which corresponds to the required oil flow, is led to said component.

US4721184A describes a system comprising a gear housing and an oil reservoir in juxtaposition, with a separated wall therebetween, and a metering channel in penetration of the wall. A gear in the housing throws oil from the lower portion of the housing (i.e., the sump) upwardly to lubricated a meshing gear, bearings, and seals and to discharge some of the oil through the wall separation into the reservoir. As a consequence of the latter, the oil level in the sump is transformed from a high static level to a lowered, dynamic level in which only the teeth of the oil throwing gear contact the oil. The metering channel insures that the housing will have some oil constantly supplied thereto from the reservoir, while the latter gear is throwing oil, and that the static level will subsequently return when the gear is halted. US550112A shows an apparatus comprising a gearbox that contains a gear that distributes lubricant throughout an interior of the gearbox when the gear is rotating and a shroud configured to contain at least a lower portion of the gear a lubricant flow-metering orifice configured to place an interior of the shroud in fluid communication with a system for delivering the lubricant to the gearbox and for taking the lubricant from the gearbox.

### SUMMARY OF THE INVENTION

In some embodiments of the invention, an apparatus is provided in accordance with claim
1. In some embodiments, the low-to-high lubricant level sensor is configured to send information about the static level of the lubricant to a display, or send the information electronically or mechanically, or send the information automatically, or send the information at a request of an operator. In some embodiments, the lubricant is oil. In some embodiments, the gearbox is a main rotor gearbox, an accessory gearbox, a reduction gearbox, a tail rotor gearbox or an intermediate gearbox.

In some embodiments of the invention, a method of monitoring a gearbox is provided in accordance with claim 9. In some embodiments, the low-to-high lubricant level sensor is configured to send the information electronically or mechanically, or send the information automatically, or send the information at a request of an operator. In some embodiments, the lubricant is oil. In some embodiments, the gearbox is a main rotor gearbox, an accessory gearbox, a reduction gearbox, a tail rotor gearbox or an intermediate gearbox.

In some embodiments of the invention, a rotorcraft is provided in accordance with claim 2. In some embodiments, the low-to-high lubricant level sensor is configured to send information about the static level of the lubricant to a display, or send the information electronically or mechanically, or send the information automatically, or send the information at a request of an operator. In some embodiments, the lubricant is oil. In some embodiments, the gearbox is a main rotor gearbox, an accessory gearbox, a reduction gearbox, a tail rotor gearbox or an intermediate gearbox.

In the specification, reference may be made to the spatial relationships between various components and to the spatial orientation of various aspects of components as the devices are depicted in the attached drawings. However, as will be recognized by those skilled in the art after a complete reading of the present application, the devices, members, apparatuses, etc. described herein may be positioned in any desired orientation. Thus, the use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the device described herein may be oriented in any desired direction.

The present invention addresses the problems with drive systems in use today that are known to lead to rotorcraft failure. More particularly, the drive system of the present invention was designed to overcome drive system failures by including one or more of the following design features: (1) minimize the number of single path drive system components; (2) provide maximum system separation and redundancy; (3) minimize maintenance requirements and maintenance related incidents; (4) minimize the potential of loss of lubrication events; and/or (5) maximize main rotor gearbox loss of lubrication capability. The rotorcraft drive system described herein includes, e.g., dual engine reduction gearboxes completely isolated from the remainder of drive system via freewheeling clutches in the main rotor gearbox, dual accessory gearboxes separate from the main rotor gearbox, and the distribution of the gearbox driven accessories among the separate systems, among other improvements.

The present invention was developed to address the failures common to rotorcraft drive systems and is based on a completely new design and application of new technology to rotorcraft safety. More particularly, the new rotorcraft drive system is focused in an unparalleled manner on safety and redundancy. The goal of safety drove the design and development of the unique layout and configuration of the rotorcraft drive system described herein, which incorporates unique features and system separation that protects primary aircraft systems from the most common drive system failures. The drive system has also been designed to maximize the operational capability in the event of an uncommon failure, such as a loss of lubrication.

High-speed gearing and the associated heat generation is always an area of concern for gearbox survivability. The ability to continue torque transmission, particularly in a loss of lubrication scenario is of great importance. For example, the present invention can be used with a powertrain for a rotorcraft that includes two separate engine reduction gearboxes (RGB), e.g., one RGB for each engine of a two-engine rotorcraft. For example, the present invention can be used with the reduction gearboxes that are fully self-contained and separate from each other, reducing the engine output speed from 21,000 RPM to approximately 6,000 RPM prior to transmitting torque to the main rotor gearbox (MRGB). This rotational speed reduction is accomplished with, e.g., a simple three (3)-gear reduction. The rotational reduction can be accomplished with 2, 3, 4, 5, 6 or more gears; however, a 3 gear system provided the requisite reduction. Each RGB has its own self-contained lubrication system that may include one or more pumps, filters, oil monitoring sensors, and a unique core in the aircraft cooler assembly.

With this arrangement, where high-speed gearing is contained in separate gearboxes and cooled independently, the survivability of the total drive system is greatly enhanced, particularly in the event of high speed gear failure or loss of lubricant in an individual RGB.

The Main Rotor Gearbox (MRGB) transmits torque from the Reduction Gearboxes (RGB) to the main rotor mast, to the accessory gearboxes, to the hydraulic pump and generator that is mounted to the MRGB, to the tail rotor drive shaft and/or to the cooling fans.

The drive system and the associated cooling system of the present invention can also take advantage of a number of additional features that minimize the possibility of loss of lubricant and to maximize the operational time if a loss of lubricant event does occur, to maximize the operational time if a fan in the cooling system fails. The cooling system can include redundant fans, a transition duct between a shared cooler and the redundant fans that enables one fan to cool an engine or gearbox if a fans fails, fan blade assemblies mounted on drive shafts or gearshafts without the need for high-speed grease-packed bearings. The drive system can also include one or more of the following: (1) the use of transfer tubes for cooler and filter mounting to eliminate the loss of lubricant in the event of loss of attachment fastener torque; (2) using an oil cooler mounted directly to the main rotor gearbox eliminating external hoses; (3) the use of all oil filter bowls are screw-on instead of held-on with small fasteners eliminating fastener failure issue from repeated removals; (4) the elimination of a high speed planetary and the heat generation associated with it during a loss of lubrication event; (5) the use of gear tooth geometry specifically designed to minimize sliding reducing heat generation at the teeth and the tendency to score during a loss of lubrication event; (6) the use of coarse pitch power gears with clearance or backlash allowing for the expansion during high heat loss of lubrication events; (7) the use of high hot hardness material utilized for primary torque carrying components maximizing their continued operation in the event of a loss of lubrication event; (8) the use of ring gear and case joint design to efficiently transmit heat away from the planetary gears in the event of a loss of lubrication event; and/or (9) the use of isotropic super finished gear teeth resulting in a greatly improved surface finish and maximizing the ability of these gears to operate in a reduced lubrication environment.

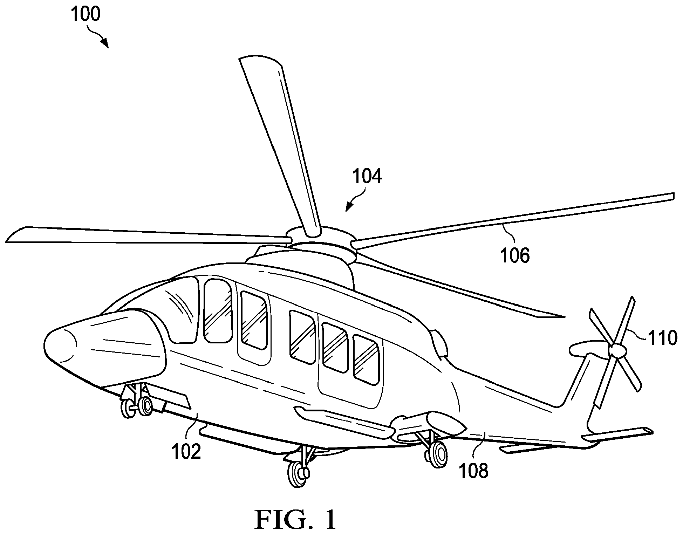

FIG. 1 shows an aircraft 100 in accordance with a preferred embodiment of the present application. In the exemplary embodiment, aircraft 100 is a helicopter having a fuselage 102 and a rotor system 104 carried thereon. A plurality of rotor blades 106 is operably associated with a rotor system 104 for creating flight. A tail boom 108 is depicted that further includes tail rotor 110.

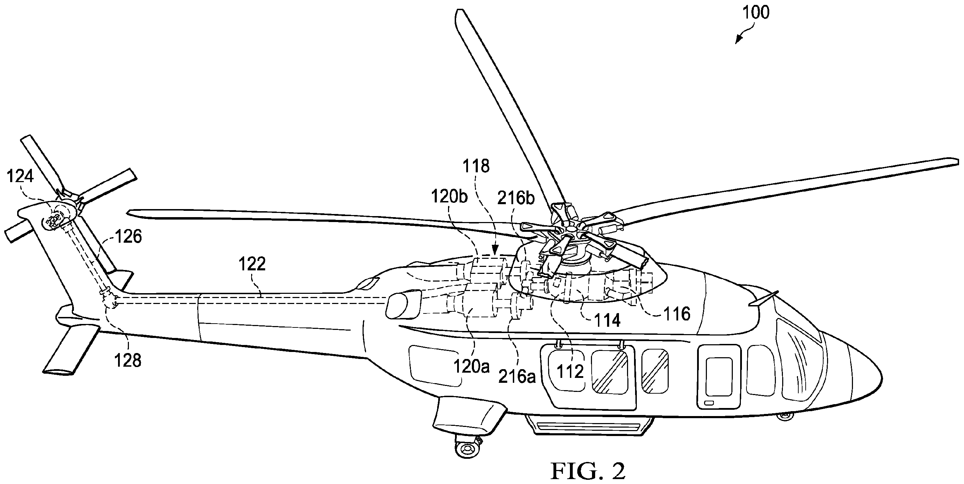

For example, FIG. 2 shows a partial cross-section perspective view of aircraft 100 that includes additional detail of the present invention. Aircraft 100 further includes a rotor mast 112, which is connected to the main rotor gearbox 114 via a main rotor mast. The main rotor gearbox 114 is connected to one or more accessory gearboxes 116 and one or more reduction gearboxes 216a, 216b. Each reduction gearbox 216a, 216b is connected to one or more engines 120a, 120b, which are within an engine compartment 118. A tail rotor drive shaft 122 transmits mechanical rotation to the tail rotor gearbox 124, which is connected via tail rotor drive shaft 126 and intermediate gearbox 128.

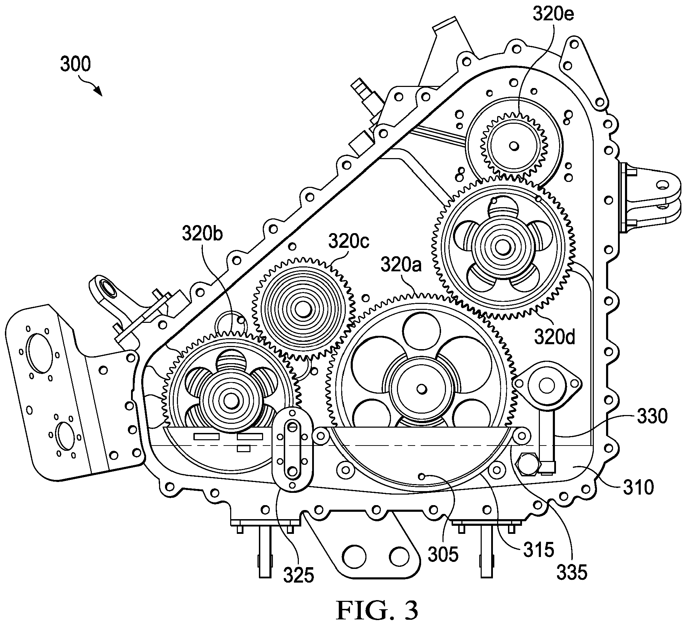

FIG. 3 depicts an interior view of gearbox 300 of the present invention that includes a low-to-high lubricant level sensor 330. Gearbox 300 is an exemplary gearbox; embodiments of the present invention may be used with a variety of types of gearboxes such as accessory gearboxes or reduction gearboxes. Gearbox 300 is equipped with lubricant flow-metering orifice 305, which is disposed in a surface of gearbox 300 and places the interior of gearbox 300 in fluid communication with a system for delivering lubricant 310 to gearbox 300 and for taking lubricant 310 from gearbox 300, and which allows lubricant 310 to flow into and out of shroud 315 during operation. Lubricant 310 may be oil or some other lubricating fluid. Lubricant 310 is shown pooled at the bottom of gearbox 300 while gears 320a, 320b, 320c, 320d, and 320e are not turning. Shroud 315 is inside gearbox 300 and is configured to contain at least a lower portion of gear 320a. Lubricant 310 enters shroud 315 through lubricant flow-metering orifice 305. When gears 320a, 320b, 320c, 320d, and 320e inside gearbox 300, are rotating, gear 320a distributes lubricant 310 throughout the interior of gearbox 300 by splashing lubricant 310 through physical contact. When gears 320a, 320b, 320c, 320d, and 320e are rotating, a portion of lubricant 310 flows into shroud 315, and a portion of that portion of lubricant 310 is moved out of shroud 315 through lubricant flow-metering orifice 305 by the action of gear 320a turning within shroud 315.

Continuing reference to FIG. 3, lubricant level sight gauge 325 allows one to check on the amount of lubricant 310 present when lubricant 310 is pooled at the bottom of gearbox 300, e.g., prior to starting the one or more engines 120a, 120b, or initiating rotation of the gears 320a, 320b, 320c, 320d, and 320e in gearbox 300. Low-to-high lubricant level sensor 330 senses the static level 335 of lubricant 310, where static level 335 is the amount of lubricant 310 present when lubricant 310 is pooled at the bottom of gearbox 300 when gears 320a, 320b, 320c, 320d, and 320e are not turning, and low-to-high lubricant level sensor 330 is operably configured to send information on the amount of lubricant 310 present electronically or mechanically to a display. Lubricant level sensor 330 may send information automatically or when queried by an operator. More particularly, the present invention provides a low-to-high lubricant level sensor 330 that measures the static level 335 and displays that level to, e.g., the crew or maintenance personnel, prior to turning the rotor.

An embodiment of the present invention can be used with gearbox 300 serving as an accessory gearbox, driving a number of components and systems. As illustrated in FIG. 3, gear 320a is the input from main rotor gearbox 114. Gearbox 300 drives a hydraulic system using gear 320b, while gear 320c drives a permanent magnet generator and gear 320e drives a blower and a primary generator.

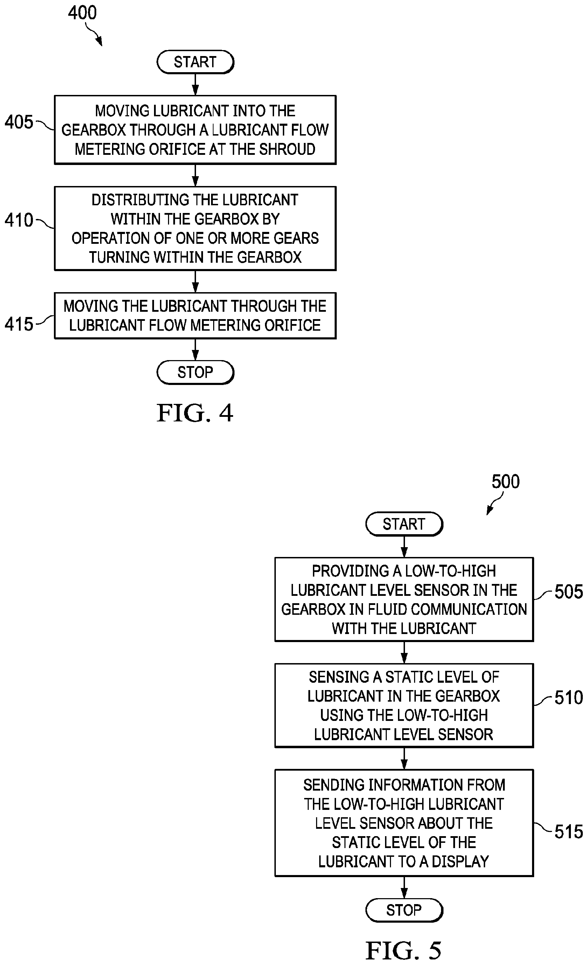

FIG. 4 illustrates a flowchart of a method embodiment of the present invention. Method 400 of lubricating a non-pressurized gearbox such as gearbox 300. Method 400 includes block 405, moving lubricant 310 into the gearbox 300 through a lubricant flow metering orifice at the shroud. Method 400 also includes block 410, distributing the lubricant 310 within the gearbox 300 by operation of one or more gears such as 320a, 320b, 320c, 320d, and 320e turning within the gearbox. Method 400 further includes block 415, moving the lubricant 310 through the lubricant flow metering orifice 305.

FIG. 5 depicts a flowchart of another method implementation of the present invention. Method 500 of monitoring a gearbox includes block 505, providing a low-to-high lubricant level sensor in the gearbox 300 in fluid communication with the lubricant 310; and block 510, sensing a static level of lubricant 310 in the gearbox 300 using the low-to-high lubricant level sensor. Method 500 further includes block 515, sending information from the low-to-high lubricant level sensor about the static level of the lubricant 310 to a display.

The skilled artisan will recognize that lubricant flow-metering orifice 305, shroud 315, and method 400 efficiently supply lubricant to and distribute lubricant 310 with a component or system such as gearbox 300, providing effective lubrication in rotorcraft generally. The skilled artisan will also recognize that embodiments of the present invention can be used for coolants and cooling systems as well as for lubricants and lubricating systems, or for fluids that serve as coolants and lubricants and systems and methods for cooling and lubrication.

It will be understood that particular embodiments described herein are shown by way of illustration and not as limitations of the invention. The principal features of this invention can be employed in various embodiments without departing from the scope of the invention. Those skilled in the art will recognize, or be able to ascertain using no more than routine experimentation, numerous equivalents to the specific procedures described herein. Such equivalents are considered to be within the scope of this invention and are covered by the claims.

All publications and patent applications mentioned in the specification are indicative of the level of skill of those skilled in the art to which this invention pertains.

The use of the word "a" or "an" when used in conjunction with the term "comprising" in the claims and/or the specification may mean "one," but it is also consistent with the meaning of "one or more," "at least one," and "one or more than one." The use of the term "or" in the claims is used to mean "and/or" unless explicitly indicated to refer to alternatives only or the alternatives are mutually exclusive, although the disclosure supports a definition that refers to only alternatives and "and/or." Throughout this application, the term "about" is used to indicate that a value includes the inherent variation of error for the device, the method being employed to determine the value, or the variation that exists among the study subjects.

As used in this specification and claim(s), the words "comprising" (and any form of comprising, such as "comprise" and "comprises"), "having" (and any form of having, such as "have" and "has"), "including" (and any form of including, such as "includes" and "include") or "containing" (and any form of containing, such as "contains" and "contain") are inclusive or open-ended and do not exclude additional, unrecited elements or method steps. In embodiments of any of the compositions and methods provided herein, "comprising" may be replaced with "consisting essentially of" or "consisting of." As used herein, the phrase "consisting essentially of" requires the specified integer(s) or steps as well as those that do not materially affect the character or function of the claimed invention. As used herein, the term "consisting" is used to indicate the presence of the recited integer (e.g., a feature, an element, a characteristic, a property, a method/process step, or a limitation) or group of integers (e.g., feature(s), element(s), characteristic(s), property(ies), method/process(s) steps, or limitation(s)) only.

The term "or combinations thereof" as used herein refers to all permutations and combinations of the listed items preceding the term. For example, "A, B, C, or combinations thereof' is intended to include at least one of: A, B, C, AB, AC, BC, or ABC, and if order is important in a particular context, also BA, CA, CB, CBA, BCA, ACB, BAC, or CAB. Continuing with this example, expressly included are combinations that contain repeats of one or more item or term, such as BB, AAA, AB, BBC, AAABCCCC, CBBAAA, CABABB, and so forth. The skilled artisan will understand that typically there is no limit on the number of items or terms in any combination, unless otherwise apparent from the context.

As used herein, words of approximation such as, without limitation, "about," "substantial" or "substantially" refers to a condition that when so modified is understood to not necessarily be absolute or perfect but would be considered close enough to those of ordinary skill in the art to warrant designating the condition as being present. The extent to which the description may vary will depend on how great a change can be instituted and still have one of ordinary skill in the art recognize the modified feature as still having the required characteristics and capabilities of the unmodified feature. In general, but subject to the preceding discussion, a numerical value herein that is modified by a word of approximation such as "about" may vary from the stated value by at least ±1, 2, 3, 4, 5, 6, 7, 10, 12 or 15%.

## Claims

1. An apparatus comprising:
a non-pressurized gearbox (300) that contains a gear (320a) that distributes lubricant throughout an interior of the non-pressurized gearbox (300) when the gear (320a) is rotating; and
a shroud (315) configured to contain at least a lower portion of the gear (320a);
a lubricant flow-metering orifice (305) configured to place an interior of the shroud (315) in fluid communication with a system for delivering the lubricant to the gearbox (300) and for taking the lubricant from the gearbox (300); and
a low-to-high lubricant level sensor (330) configured to be located within the non-pressurized gearbox (300), the low-to-high lubricant level sensor (330) configured to sense a static level of a lubricant within the gearbox (300) and to display the static level of the lubricant.

2. A rotorcraft (100), comprising:
a fuselage (102);
one or more engines (120a, 120b) coupled to the fuselage (102);
a non-pressurized gearbox (300) coupled to the one or more engines (120a, 120b),
wherein the non-pressurized gearbox (300) contains a gear (320a) that distributes lubricant throughout an interior of the non-pressurized gearbox (300) when the gear (320a) is rotating and comprises;
a shroud (315) configured to contain at least a lower portion of the gear (320a);
a lubricant flow-metering orifice (305) configured to place an interior of the shroud (315) in fluid communication with a system for delivering the lubricant to the gearbox (300) and for taking the lubricant from the gearbox (300); and
a low-to-high lubricant level sensor (330) within the gearbox (300) configured to sense a static level of a lubricant within the gearbox (300) and to display the static level of the lubricant.

3. The apparatus of claim 1, wherein the low-to-high lubricant level sensor (330) is configured to send information about the static level of the lubricant to a display; or
the rotorcraft (100) of claim 2 wherein the low-to-high lubricant level sensor (330) is configured to send information about the static level of the lubricant to a display.

4. The apparatus or rotorcraft (100) of claim 3, wherein the low-to-high lubricant level sensor (330) is configured to send the information electronically or mechanically.

5. The apparatus or rotorcraft (100) of claim 3 or of claim 4, wherein the low-to-high lubricant level sensor (330) is configured to send the information automatically.

6. The apparatus or rotorcraft (100) of claim 3 or of claim 4, wherein the low-to-high lubricant level sensor (330) is configured to send the information at a request of an operator.

7. The apparatus of claim 1 or of any preceding apparatus claim, or the rotorcraft (100) of claim 2 or of any preceding rotorcraft claim, wherein the lubricant is oil.

8. The apparatus of claim 1 or of any preceding apparatus claim, or the rotorcraft (100) of claim 2 or of any preceding rotorcraft claim, wherein the gearbox (300) is a main rotor gearbox, an accessory gearbox, a reduction gearbox, a tail rotor gearbox or an intermediate gearbox.

9. A method of monitoring a non-pressurized gearbox (300), comprising:
providing a non-pressurized gearbox (300) that contains a gear (320a) that distributes lubricant throughout an interior of the non-pressurized gearbox (300) when the gear (320a) is rotating and comprises;
a shroud (315) configured to contain at least a lower portion of the gear (320a);
a lubricant flow-metering orifice (305) configured to place an interior of the shroud (315) in fluid communication with a system for delivering the lubricant to the gearbox (300) and for taking the lubricant from the gearbox (300); and
a low-to-high lubricant level sensor (330) in the gearbox (300) in fluid communication with the lubricant within the gearbox;
sensing a static level of the lubricant in the gearbox (300) using the low-to-high lubricant level sensor (330); and
sending information from the low-to-high lubricant level sensor (330) about the static level of the lubricant to a display.

10. The method of claim 9, wherein the sending information is performed electronically or mechanically.

11. The method of claim 9 or of claim 10, wherein the sending information is performed automatically.

12. The method of claim 9 or of claim 10 or of claim 11, wherein the lubricant is oil.

13. The method of claim 9 or of any preceding method claim, wherein the gearbox is a main rotor gearbox, a reduction gearbox, or an accessory gearbox.

## Patentansprüche

1. Vorrichtung, Folgendes umfassend:
ein druckfreies Getriebe (300), das ein Zahnrad (320a) enthält, das Schmiermittel durch den Innenraum des druckfreien Getriebes (300) verteilt, wenn sich das Zahnrad (320a) dreht; und
eine Verkleidung (315), die dazu ausgelegt ist, mindestens einen unteren Abschnitt des Zahnrads (320a) zu enthalten;
eine Schmiermitteldosieröffnung (305), die dazu ausgelegt ist, das Innere der Verkleidung (315) mit einem System fluidisch zu verbinden, um das Schmiermittel an das Getriebe (300) zu liefern und das Schmiermittel aus dem Getriebe (300) zu entnehmen; und
einen aufsteigenden Schmiermittelfüllstandssensor (330), der dazu ausgelegt ist, sich innerhalb des druckfreien Getriebes (300) zu befinden, wobei der aufsteigende Schmiermittelfüllstandssensor (330) dazu ausgelegt ist,
einen statischen Füllstand eines Schmiermittels innerhalb des Getriebes (300) zu erfassen und den statischen Füllstand des Schmiermittels anzuzeigen.

2. Drehflügler (100), Folgendes umfassend:
einen Rumpf (102);
ein oder mehrere mit dem Rumpf (102) gekoppelte Triebwerke (120a, 120b);
ein druckfreies Getriebe (300), das mit dem einen oder den mehreren Triebwerken (120a, 12b) gekoppelt ist,
wobei das druckfreie Getriebe (300) ein Zahnrad (320a) enthält, das Schmiermittel durch den Innenraum des druckfreien Getriebes (300) verteilt, wenn sich das Zahnrad (320a) dreht; und Folgendes umfasst;
eine Verkleidung (315), die dazu ausgelegt ist, mindestens einen unteren Abschnitt des Zahnrads (320a) zu enthalten;
eine Schmiermitteldosieröffnung (305), die dazu ausgelegt ist, das Innere der Verkleidung (315) mit einem System fluidisch zu verbinden, um das Schmiermittel an das Getriebe (300) zu liefern und das Schmiermittel aus dem Getriebe (300) zu entnehmen; und
einen aufsteigenden Schmiermittelfüllstandssensor (330) innerhalb des Getriebes (300), der dazu ausgelegt ist,
einen statischen Füllstand eines Schmiermittels innerhalb des Getriebes (300) zu erfassen und den statischen Füllstand des Schmiermittels anzuzeigen.

3. Vorrichtung nach Anspruch 1, wobei der aufsteigende Schmiermittelfüllstandssensor (330) dazu ausgelegt ist, Informationen über den statischen Füllstand des Schmiermittels an eine Anzeige zu senden; oder
Drehflügler (100) nach Anspruch 2, wobei der aufsteigende Schmiermittelfüllstandssensor (330) dazu ausgelegt ist, Informationen über den statischen Füllstand des Schmiermittels an eine Anzeige zu senden.

4. Vorrichtung oder Drehflügler (100) nach Anspruch 3, wobei der aufsteigende Schmiermittelfüllstandssensor (330) dazu ausgelegt ist, die Informationen elektronisch oder mechanisch zu senden.

5. Vorrichtung oder Drehflügler (100) nach Anspruch 3 oder Anspruch 4, wobei der aufsteigende Schmiermittelfüllstandssensor (330) dazu ausgelegt ist, die Informationen automatisch zu senden.

6. Vorrichtung oder Drehflügler (100) nach Anspruch 3 oder Anspruch 4, wobei der aufsteigende Schmiermittelfüllstandssensor (330) dazu ausgelegt ist, die Informationen auf Anfrage eines Bedieners zu senden.

7. Vorrichtung nach Anspruch 1 oder einem der vorstehenden Vorrichtungsansprüche oder Drehflügler (100) nach Anspruch 2 oder einem der vorstehenden Drehflügleransprüche, wobei das Schmiermittel Öl ist.

8. Vorrichtung nach Anspruch 1 oder einem der vorstehenden Vorrichtungsansprüche oder Drehflügler (100) nach Anspruch 2 oder einem der vorstehenden Drehflügleransprüche, wobei das Getriebe (300) ein Hauptrotorgetriebe, ein Hilfsgetriebe, ein Reduziergetriebe, ein Heckrotorgetriebe oder ein Zwischengetriebe ist.

9. Verfahren zum Überwachen eines druckfreien Getriebes (300), Folgendes umfassend:
Vorsehen eines druckfreien Getriebes (300), das ein Zahnrad (320a) enthält, das Schmiermittel durch den Innenraum des druckfreien Getriebes (300) verteilt,
wenn sich das Zahnrad (320a) dreht, und Folgendes umfasst:
eine Verkleidung (315), die dazu ausgelegt ist, mindestens einen unteren Abschnitt des Zahnrads (320a) zu enthalten;
eine Schmiermitteldosieröffnung (305), die dazu ausgelegt ist, das Innere der Verkleidung (315) mit einem System fluidisch zu verbinden, um das Schmiermittel an das Getriebe (300) zu liefern und das Schmiermittel aus dem Getriebe (300) zu entnehmen; und
einen aufsteigenden Schmiermittelfüllstandssensor (330) im Getriebe (300), der mit dem Schmiermittel innerhalb des Getriebes in Fluidverbindung steht;
Erfassen eines statischen Füllstands des Schmiermittels im Getriebe (300) unter Verwendung des aufsteigenden Schmiermittelfüllstandssensors (330) und
Senden von Informationen vom aufsteigenden Schmiermittelfüllstandssensor (330) über den statischen Füllstand des Schmiermittels an eine Anzeige.

10. Verfahren nach Anspruch 9, wobei das Senden der Informationen elektronisch oder mechanisch erfolgt.

11. Verfahren nach Anspruch 9 oder Anspruch 10, wobei das Senden der Informationen automatisch erfolgt.

12. Verfahren nach Anspruch 9 oder Anspruch 10 oder Anspruch 11, wobei das Schmiermittel Öl ist.

13. Verfahren nach Anspruch 9 oder einem der vorstehenden Verfahrensansprüche, wobei das Getriebe ein Hauptrotorgetriebe, ein Reduziergetriebe oder ein Hilfsgetriebe ist.

## Revendications

1. Appareil, comprenant :
une boîte de transmission non pressurisée (300) qui contient un engrenage (320a) qui distribue du lubrifiant dans l'ensemble d'un intérieur de la boîte de transmission non pressurisée (300) lorsque l'engrenage (320a) est en rotation ; et
un carter (315) configuré pour contenir au moins une partie inférieure de l'engrenage (320a) ;
un orifice (305) de mesure de débit de lubrifiant configuré pour mettre un intérieur du carter (315) en communication fluidique avec un système pour l'alimentation en lubrifiant de la boîte de transmission (300) et pour le prélèvement du lubrifiant de la boîte de transmission (300) ; et
un capteur (330) de niveau bas à haut de lubrifiant configuré pour être placé au sein de la boîte de transmission non pressurisée (300), le capteur (330) de niveau bas à haut de lubrifiant étant configuré pour détecter un niveau statique d'un lubrifiant au sein de la boîte de transmission (300) et pour afficher le niveau statique du lubrifiant.

2. Giravion (100), comprenant :
un fuselage (102) ;
un ou plusieurs moteurs (120a, 120b) accouplés au fuselage (102) ;
une boîte de transmission non pressurisée (300) accouplée aux un ou plusieurs moteurs (120a, 120b), la boîte de transmission non pressurisée (300) contenant un engrenage (320a) qui distribue du lubrifiant dans l'ensemble d'un intérieur de la boîte de transmission non pressurisée (300) lorsque l'engrenage (320a) est en rotation, et comprenant ;
un carter (315) configuré pour contenir au moins une partie inférieure de l'engrenage (320a) ;
un orifice (305) de mesure de débit de lubrifiant configuré pour mettre un intérieur du carter (315) en communication fluidique avec un système pour l'alimentation en lubrifiant de la boîte de transmission (300) et pour le prélèvement du lubrifiant de la boîte de transmission (300) ; et
un capteur (330) de niveau bas à haut de lubrifiant au sein de la boîte de transmission (300) configuré pour détecter un niveau statique d'un lubrifiant au sein de la boîte de transmission (300) et pour afficher le niveau statique du lubrifiant.

3. Appareil selon la revendication 1, dans lequel le capteur (330) de niveau bas à haut de lubrifiant est configuré pour envoyer à un affichage des informations concernant le niveau statique du lubrifiant ; ou
giravion (100) selon la revendication 2, dans lequel le capteur (330) de niveau bas à haut de lubrifiant est configuré pour envoyer à un affichage des informations concernant le niveau statique du lubrifiant.

4. Appareil ou giravion (100) selon la revendication 3, dans lequel le capteur (330) de niveau bas à haut de lubrifiant est configuré pour envoyer les informations de façon électronique ou de façon mécanique.

5. Appareil ou giravion (100) selon la revendication 3 ou selon la revendication 4, dans lequel le capteur (330) de niveau bas à haut de lubrifiant est configuré pour envoyer les informations de façon automatique.

6. Appareil ou giravion (100) selon la revendication 3 ou selon la revendication 4, dans lequel le capteur (330) de niveau bas à haut de lubrifiant est configuré pour envoyer les informations à la demande d'un opérateur.

7. Appareil selon la revendication 1 ou selon l'une quelconque des revendications d'appareil précédentes, ou giravion (100) selon la revendication 2 ou selon l'une quelconque des revendications de giravion précédentes, dans lequel le lubrifiant est de l'huile.

8. Appareil selon la revendication 1 ou selon l'une quelconque des revendications d'appareil précédentes, ou giravion (100) selon la revendication 2 ou selon l'une quelconque des revendications de giravion précédentes, dans lequel la boîte de transmission (300) est une boîte de transmission de rotor principal, une boîte de transmission d'accessoires, une boîte de transmission de réduction, une boîte de transmission de rotor de queue ou une boîte de transmission intermédiaire.

9. Procédé de surveillance d'une boîte de transmission non pressurisée (300), comprenant :
la fourniture d'une boîte de transmission non pressurisée (300) qui contient un engrenage (320a) qui distribue du lubrifiant dans l'ensemble d'un intérieur de la boîte de transmission non pressurisée (300) lorsque l'engrenage (320a) est en rotation, et comprend :
un carter (315) configuré pour contenir au moins une partie inférieure de l'engrenage (320a) ;
un orifice (305) de mesure de débit de lubrifiant configuré pour mettre un intérieur du carter (315) en communication fluidique avec un système pour l'alimentation en lubrifiant de la boîte de transmission (300) et pour le prélèvement du lubrifiant de la boîte de transmission (300) ; et
un capteur (330) de niveau bas à haut de lubrifiant dans la boîte de transmission (300) en communication fluidique avec le lubrifiant au sein de la boîte de transmission ;
la détection d'un niveau statique du lubrifiant dans la boîte de transmission (300) au moyen du capteur (330) de niveau bas à haut de lubrifiant ; et
l'envoi à un affichage d'informations provenant du capteur (330) de niveau bas à haut de lubrifiant concernant le niveau statique du lubrifiant.

10. Procédé selon la revendication 9, dans lequel l'envoi d'informations s'effectue de façon électronique ou de façon mécanique.

11. Procédé selon la revendication 9 ou selon la revendication 10, dans lequel l'envoi d'informations s'effectue de façon automatique.

12. Procédé selon la revendication 9 ou selon la revendication 10 ou selon la revendication 11, dans lequel le lubrifiant est de l'huile.

13. Procédé selon la revendication 9 ou selon l'une quelconque des revendications de procédé précédentes, dans lequel la boîte de transmission est une boîte de transmission de rotor principal, une boîte de transmission de réduction ou une boîte de transmission d'accessoires.
